# DEMANDE DE BREVET EUROPEEN

(11) **EP 3 578 347 A1**
(43) Date de publication de la demande: **11.12.2019**
(21) Numéro de dépôt: 19178270.5
(22) Date de dépôt: 04.06.2019
(51) Int. Cl.: B29C 70/54, B29C 70/46

(54) **PROCÉDÉ POUR FABRIQUER UNE PIÈCE EN MATERIAU COMPOSITE**

(30) Priorité: 04.06.2018 FR 1854842
(71) Demandeur: Setforge Société Nouvelle, 42152 l'Horme (FR)
(72) Inventeur: FELIX, Damien, 42400 SAINT CHAMOND (FR); PHILIPPE, Aurélien, 57940 VOLSTROFF (FR); MAYER, Etienne, 57100 Thionville (FR); RISSER, Jean-Marie, 57970 YUTZ (FR); BIGOT, Régis, 57645 MONTOY-FLANVILLE (FR); BECKER, Eric, 57385 TETING-SUR-NIED (FR); MAYER, Philippe, 57000 METZ (FR)
(74) Mandataire: Lavialle, Bruno François Stéphane

(57) **Abrégé**

Procédé pour fabriquer une pièce (1) en matériau composite, comprenant les étapes de : disposer des fibres longues de renfort (24) et de la résine dans un moule. Les fibres sont placées dans l'outillage sous la forme d'un empilement de couches successives, chaque couche comprenant plusieurs épaisseurs de fibres liées mécaniquement entre elles à l'intérieur de chaque couche.

L'invention s'applique à la fabrication de pièces mécaniques structurelles telles que des pièces structurelles aéronautiques ou automobiles.

## Description

L'invention concerne un procédé pour fabriquer une pièce en matériau composite, par exemple une pièce tridimensionnelle ou massive, telle qu'une articulation ou une bielle, tout en lui conférant une tenue mécanique relativement élevée.

### ARRIERE PLAN DE L'INVENTION

Il est connu de fabriquer des pièces en matériau composite en intégrant des fibres de renfort courtes dans de la résine thermoplastique, et en procédant à la mise en forme des pièces sous presse. Avec ce procédé, la longueur des fibres est limitée à vingt ou trente millimètres et les fibres s'orientent de façon aléatoire dans la résine thermoplastique.

Ce procédé, qui fait partie des procédés dits SMC (Sheet Molding Compound), permet de fabriquer des pièces ayant une densité de fibres comprise entre trente et quarante pourcents, de manière générale, ce qui correspond à des pièces faiblement chargées ayant par là même une tenue mécanique relativement basse. En pratique, ce procédé permet de fabriquer des pièces d'épaisseur régulière et relativement faible, telles que des pièces de carénage ou de capotage pour l'industrie automobile.

Selon un autre procédé connu, un tissu plan de fibres de renfort, pouvant avoir une épaisseur relativement conséquente, est imprégné de résine thermoplastique avant d'être installé dans une presse pour être déformé afin de lui donner un galbe. Plusieurs éléments de ce type peuvent être fabriqués avant d'être collés les uns aux autres par matriçage à chaud.

Il est ainsi par exemple possible de rapporter une pièce à section en L sur une portion plane, pour réaliser une pièce tridimensionnelle à section en T. Ce procédé qui a été développé par la société Carbon Forge permet de fabriquer des pièces comportant des fibres plus longues (comprise entre cinquante et cent millimètres), ayant une densité de fibres plus importante (comprise entre cinquante-cinq et soixante pourcents). Ce procédé permet d'obtenir une tenue mécanique plus élevée, d'autant plus que l'orientation des fibres est sensiblement maîtrisée au lieu d'être désordonnée.

En pratique, cet autre procédé permet de fabriquer des pièces structurelles mais ayant des dimensions réduites et des formes qui doivent malgré tout être relativement simples.

Dernièrement a été développé un nouveau procédé pour fabriquer en matériau composite une pièce brute ayant une forme massive et/ou tridimensionnelle, comprenant les étapes de :
- placer au moins un toron de fibres de renfort imprégné ou comélé de résine thermoplastique en quantité excédentaire pour constituer une préforme de la pièce fabriquée ;
- matricer à chaud cette préforme pour lui donner une forme souhaitée tout en évacuant la résine excédentaire ;
- refroidir la préforme matricée en la maintenant sous pression pour constituer la pièce brute.

Ce procédé, connu du document FR-A-2981001, permet de réaliser une pièce tridimensionnelle ayant une densité élevée de fibres qui sont orientées selon la trajectoire utilisée lors de l'enroulement, ce qui contribue à accroître la tenue mécanique tout en autorisant la fabrication de pièces tridimensionnelles et/ou massives.

Par ailleurs, il est connu du document US-A-2013/149491 un procédé pour réaliser une pièce par enroulement en boucle d'une bande sur elle-même de manière à former des couches successives qui sont fixées les unes aux autres. La bande est en matériau préimprégné et est continue d'une couche à l'autre. Un inconvénient de ce procédé est que la largeur de la bande limite les dimensions que peut avoir la pièce finale. En outre, les formes qu'il est possible de conférer à la pièce sont limitées du fait de l'agencement en bande du matériau préimpégné. L'orientation de cette bande est limitée à un espace 2D et à un rayon de courbure minimum en raison de sa rigidité spécifique.

### OBJET DE L'INVENTION

Le but de l'invention est d'améliorer encore les performances mécaniques des pièces en matériau composite à matrice thermoplastique.

### RESUME DE L'INVENTION

A cet effet, l'invention a pour objet un procédé pour fabriquer une pièce en matériau composite, comprenant les étapes de :
- disposer des fibres longues de renfort et de la résine dans un outillage ; les fibres longues étant disposées pour s'étendre au moins en partie selon au moins une direction de sollicitation mécanique de la pièce à fabriquer ;
- mettre en forme à chaud cette préforme dans un outillage de mise en forme, en veillant à contenir les fibres et la résine dans l'outillage pour obtenir la pièce ;
- effectuer une phase de refroidissement de la pièce en la maintenant sous pression.

Les fibres sont placées dans l'outillage sous la forme d'un empilement de couches successives ; en ce que l'empilement de couches a une hauteur égale à une première dimension extérieure de la préforme ; et en ce que les fibres disposées en périphérie de chaque couche s'étendent au voisinage d'une surface externe de la pièce.

En contenant les fibres, on évite une sortie des fibres hors de l'outillage, fibres qui seraient sectionnées lors du matriçage. L'opération de matriçage renforce elle la pénétration de la résine entre les fibres de renforts sans risquer une coupure des fibres qui altérerait la résistance mécanique de la pièce. Du fait de la rétention des fibres et de la résine lors du matriçage, la masse de la préforme est identique à celle de la pièce finie (en négligeant les fuites inter-outillage correspondant typiquement à moins de 1% du poids de la pièce). Les fibres s'étendant au moins en partie selon au moins une direction de sollicitation mécanique de la pièce à fabriquer sont ainsi disposées et orientées selon une géométrie prédéfinie pour garantir des performances mécaniques de la pièce. La mise en forme à chaud engendre une liaison mécanique des couches entre elles assurée par la résine des différentes couches. La liaison mécanique des couches entre elles contribue aux performances mécaniques globales de la pièce.

Avantageusement, les couches peuvent être liées mécaniquement entre elles avant leur mise en place dans l'outillage. Ceci contribue également à la résistance mécanique de la pièce.

D'autres caractéristiques et avantages de l'invention ressortiront à la lecture de la description qui suit de modes de mise en oeuvre particuliers et non limitatifs de l'invention.

### BREVE DESCRIPTION DES FIGURES

Il sera fait référence aux dessins annexés, parmi lesquels :
- la figure 1 est une vue de dessus d'une bielle fabriquée avec le procédé selon l'invention ;
- la figure 2 est une vue en perspective de l'assemblage de couches de fibres formant la bielle avec le procédé selon l'invention ;
- la figure 3 est une vue en perspective éclatée d'une couche de cet assemblage ;
- la figure 4 est une vue en perspective d'une préforme de la bielle ;
- la figure 5 montre en perspective un outillage de préformage utilisable pour fabriquer la préforme 123 de la figure 4 conformément à l'invention ;
- la figure 6 est une vue en perspective d'un deuxième outillage de préformage pour fabriquer la préforme 113 de la figure 4 conformément à l'invention ;
- la figure 7 est une vue schématique, en perspective éclatée, d'un outillage de matriçage utilisé pour le forgeage de la bielle ;
- la figure 8 est une vue en perspective d'une couche de l'assemblage de couches, obtenue par la mise en oeuvre d'une une variante du procédé ;
- la figure 9 est une vue en perspective d'une bielle fabriquée avec un procédé selon une variante de l'invention.

### DESCRIPTION DETAILLEE DE L'INVENTION

Le procédé de l'invention est ici décrit en application à la fabrication d'une pièce ayant la forme d'une bielle, étant entendu qu'il ne s'agit là que d'un exemple de mise en oeuvre du procédé.

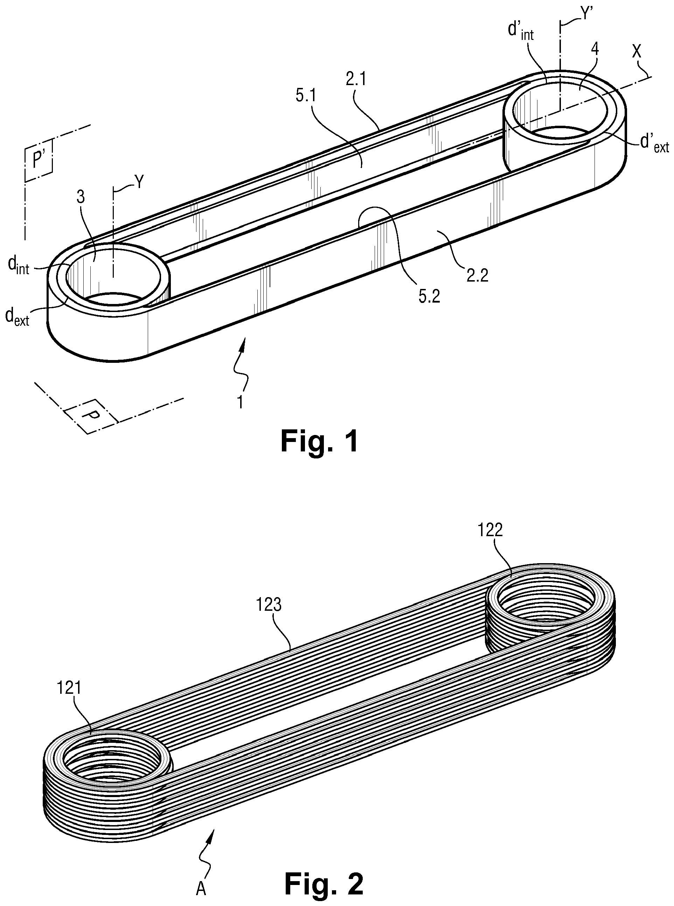

Dans ce mode de mise en oeuvre, la pièce à fabriquer est une bielle 1 représentée sur la figure 1.

La bielle 1 comporte un corps 2, allongé selon un axe longitudinal X, ayant une extrémité pourvue d'un premier palier 3 d'axe central Y normal à un plan médian P de la bielle 1 contenant l'axe X et une extrémité pourvue d'un deuxième palier 4 d'axe central Y' normal au plan médian P.

Le corps 1 comporte deux bras 2.1, 2.2 reliant les deux paliers 3, 4 l'un à l'autre. Chaque bras est pourvu d'une nervure longitudinale 5.1, 5.2. Chacun des deux paliers a une forme de paroi généralement cylindrique à base circulaire.

La bielle 1 a une forme qui est symétrique par rapport à un plan P' contenant les axes X, X' et s'étendant perpendiculairement au plan médian P.

En référence également aux figures 2 à 4, la bielle 1 est obtenue à partir d'une préforme 10 comportant un assemblage A de fibres qui sont entourées de résine.

L'assemblage A comprend une superposition de couches élémentaires 100 liées mécaniquement entre elles pour former la préforme 10. Le nombre de couches élémentaires 100 est ici déterminé pour que l'empilement de couches élémentaires 100 formant l'assemblage A ait une masse égale à la masse de la bielle 1.

Chaque couche élémentaire 100 comprend une première sous-couche 11 et une sous-couche 12.

La sous-couche 11 comprend :
- un premier enroulement élémentaire de fibres 111 destiné à former le palier 3 ;
- un deuxième enroulement élémentaire de fibres 112 destiné à former le palier 4 ;
- un troisième enroulement élémentaire de fibres 113 destiné à former les bras 2 et le contour extérieur des paliers 3, 4.

La sous-couche 12 comprend :
- un premier enroulement élémentaire de fibres 121 destiné à former le palier 3 ;
- un deuxième enroulement élémentaire de fibres 122 destiné à former le palier 4 ;
- un troisième enroulement élémentaire de fibres 123 destiné à former les bras 2 et le contour intérieur des paliers 3, 4.

Les enroulements élémentaires de fibres 121, 122 ont une forme annulaire. Les enroulements élémentaires de fibres 111, 112 sont de forme ovale. On comprend que l'empilement alterné des enroulements élémentaires annulaires et ovales va procurer une plus forte contribution des fibres à la cohésion mécanique entre la partie de la pièce formant le palier et la partie de la pièce formant le corps.

Le troisième enroulement élémentaire de fibres 113 a une forme oblongue avec deux tronçons en arc de cercle à chacun desquels est superposé un des enroulements élémentaires de fibres 111, 112 et qui sont reliés l'un à l'autre par deux tronçons rectilignes destinés à s'étendre dans les bras 2.1, 2.2.

Le quatrième enroulement élémentaire de fibres 123 a une forme oblongue avec deux tronçons en arc de cercle qui entourent chacun un des enroulements élémentaires de fibres 121, 122 et qui sont reliés l'un à l'autre par deux tronçons rectilignes destinés à s'étendre dans les bras 2.1, 2.2.

Les propriétés mécaniques souhaitées pour la bielle 1 vont notamment dicter le choix de :
- le matériau constitutif des fibres ;
- le diamètre des fibres ;
- l'utilisation de plusieurs fibres de diamètres et/ou de matériaux différents ;
- la position et l'orientation des fibres dans la bielle 1 ;
- la résine ou matériau thermoplastique entourant les fibres.

D'autres propriétés physico-chimiques attendues peuvent également influer sur ces choix :
- la tenue à la chaleur (choix des matériaux) ;
- la conductivité thermique (choix des matériaux) ;
- la conduction électrique (choix des matériaux) ;
- la tenue chimique (résistance aux hydrocarbures par exemple) ;
- la résistance aux chocs et plus particulièrement au gravillonnage...

L'agencement ici décrit n'est qu'un exemple assez simple pour faire comprendre l'invention : il n'est absolument pas limitatif. Par exemple, les enroulements pourraient être différents dans leurs formes, leurs épaisseurs, le matériau employé pour la résine ou les fibres.

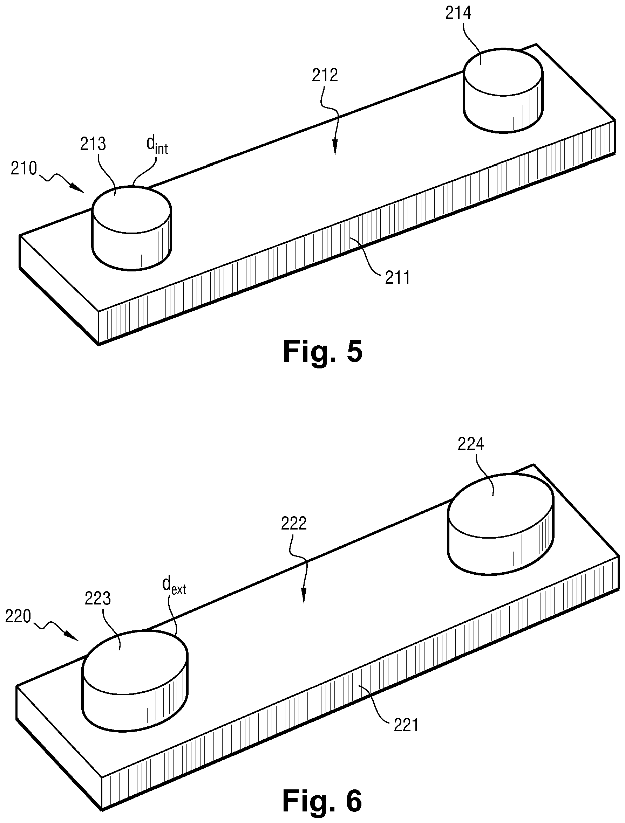

Dans un premier mode de mise en oeuvre, la bielle 1 est fabriquée à l'aide des outillages représentés sur les figures 5, 6 et 7, à savoir deux outillages de préformages 210, 220 et un outillage de matriçage ou estampage 230.

L'outil de préformage 210, représenté en figure 5, comporte ici une platine ou sole 211 ayant une face supérieure 212 plane avec en saillie deux plots de section circulaire 213, 214 ayant des diamètres sensiblement égaux aux diamètres internes des paliers 3, 4 respectivement. L'outil de préformage 210 est utilisé pour former le premier enroulement élémentaire de fibres 121, destiné à former le palier 3, le deuxième enroulement élémentaire de fibres 122, destiné à former le palier 4 et l'enroulement 113 destiné à former les 2 bras.

L'outil de préformage 220, représenté en figure 6, comporte ici une platine ou sole 221 ayant une face supérieure 222 plane, cette platine 221 étant pourvue de deux reliefs de bobinage qui sont ici deux plots de section ovale 223, 224 espacés d'une distance correspondant à l'entraxe entre les paliers 3, 4.

L'outil de préformage 220 est utilisé pour former le premier enroulement élémentaire de fibres 111, destiné à former le palier 3, le deuxième enroulement élémentaire de fibres 112, destiné à former le palier 4 et l'enroulement 123 destiné à former les 2 bras.

Pour réaliser les enroulements élémentaires de fibres 121, 122 et 113, des fibres de renfort imprégnées de résine thermoplastique sont bobinées, en contrôlant la tension des fibres, sur l'outil de préformage 210, autour des plots 213, 214, puis sont chauffées pour former chacun desdits enroulements élémentaires de fibres.

Pour réaliser les enroulements élémentaires de fibres 111, 112 et 123, des fibres de renfort imprégnées de résine thermoplastique sont bobinées, avec contrôle de leur tension, sur l'outil de préformage 220, autour des plots 223, 224 puis chauffées de manière à former chacun desdits enroulements élémentaires de fibres.

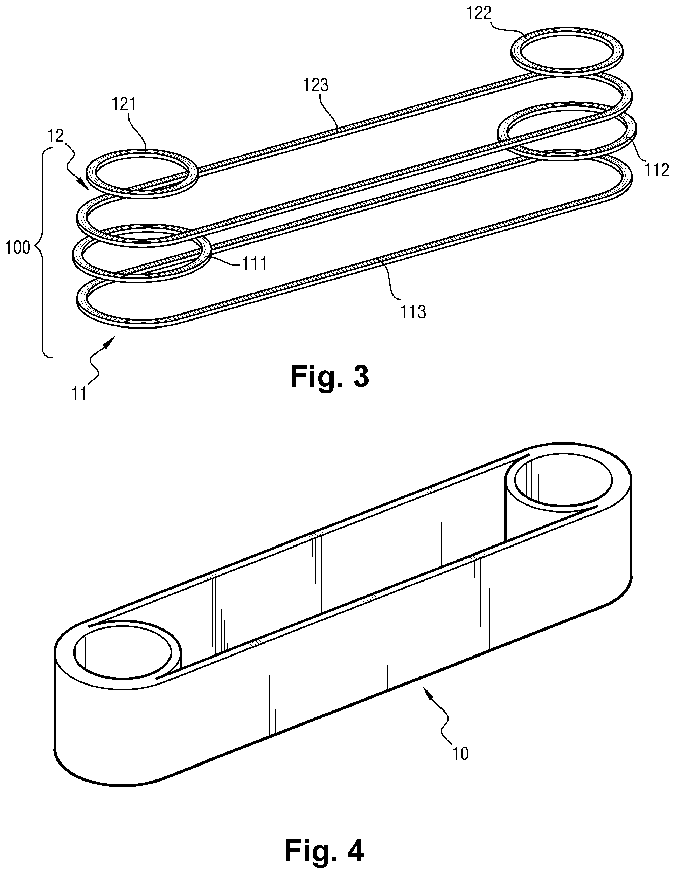

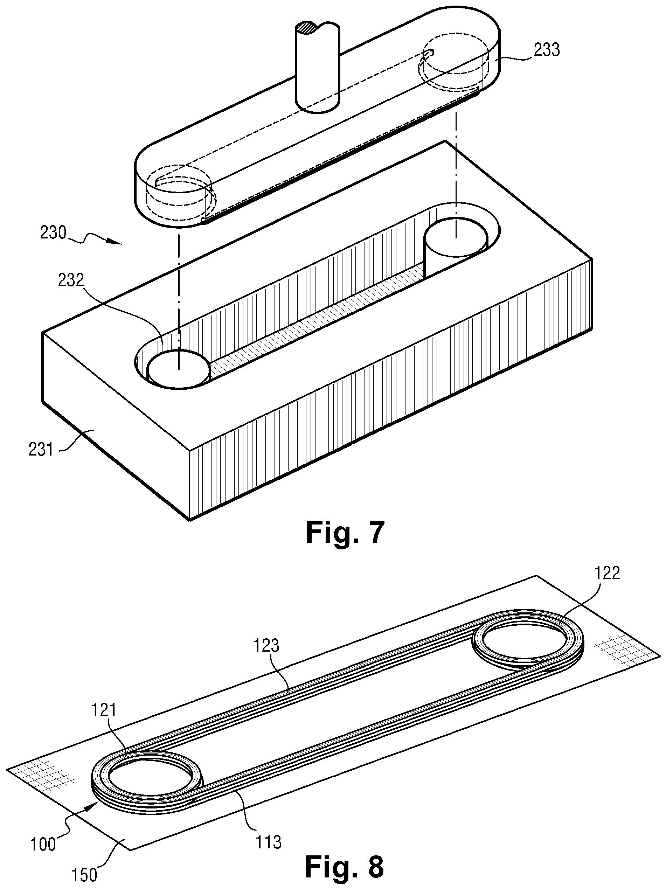

Les différents enroulements sont ensuite mis en place dans la matrice de consolidation 231 (voir la figure 7) et sont chauffées pour les souder les uns aux autres et former ainsi des couches élémentaires 100 ou pour constituer l'ébauche pré-consolidée 10 (représentée à la figure 4).

On note que les couches élémentaires 100 sont ici séparées les unes des autres : les fibres ont donc été déposées de manière discontinue entre deux couches (par opposition au dépôt d'une bande continue et unique qu'on déposerait en boucle en la faisant se recouvrir pour former des couches successives).

Les fibres de renfort et la résine ont une masse totale égale à celle de la bielle 1. Les fibres sont disposées pour s'étendre selon une trajectoire coïncidant avec les directions de sollicitation de la bielle 1.

De préférence, les fibres sont agencées, préalablement à leur dépôt, selon un ensemble allongé ayant une section transversale sensiblement circulaire. Dans cet ensemble, les fibres peuvent être imprégnées de résine ou être mêlées à la résine. Ceci autorise un grand nombre de possibilités de placement des fibres et donc une grande variété de géométries de la pièce finie.

Les fibres de renfort peuvent se présenter sous différentes formes : il peut s'agir d'un ensemble de fibres organisées parallèlement les unes aux autres ou en hélice ou une combinaison de ces deux organisations ; il peut également s'agir d'un ensemble de fibres tressées ou plus généralement assemblées les unes avec les autres pour constituer une tresse souple s'étendant globalement selon une direction principale, mais constituée de torons orientés selon de multiples directions.

Les fibres agencées en toron peuvent être bobinées sur plusieurs tours autour des différents plots, le nombre de tours étant conditionné par la section du toron vis-à-vis des dimensions de la pièce à fabriquer. Les couches 100 peuvent ainsi comporter un toron enroulé sur lui-même de manière à avoir des parties juxtaposées les unes aux autres et/ou superposées.

Les fibres imprégnées de résine thermoplastique sont bobinées sur l'outil à chaud, de manière à avoir la souplesse requise pour permettre un bobinage précis. Avantageusement, l'outillage est du type chauffant, et le bobinage en tant que tel peut être réalisé au moyen d'un bras robotisé. Apres bobinage, il y a une phase de refroidissement pour permettre la manipulation des différents enroulements. En variante, les fibres imprégnées de résine thermoplastique sont bobinées sur l'outil à froid, l'outil étant pourvu de butées agencées pour maintenir le positionnement des fibres et donc la forme de l'enroulement en attendant l'opération de préformage.

Lorsque l'assemblage des couches élémentaires 100 est entièrement terminé, il constitue une préforme 10 de la bielle 1. Cette préforme peut-être pré-consolidée dans un outillage de pré-consolidation ou être directement mise dans l'outil de matriçage 230 représenté à la figure 7 pour subir le cycle de mise en forme.

On comprend que l'empilement de couches a une hauteur égale à une première dimension extérieure de la préforme 10, dimension mesurée parallèlement aux axes de la bielle 1. On comprend également que, dans le procédé de l'invention les fibres de chaque couche sont positionnées dans ladite couche pour que les fibres s'étendent sur une zone ayant une surface, transversalement à la première dimension, voisine d'une surface de la section transversale de la pièce à obtenir. On comprend qu'ainsi, à chaque endroit donné de la pièce le long de la première dimension, les dimensions transversales de la pièce sont celles de la couche se trouvant audit endroit donné. Il est donc possible de fabriquer une pièce dont les dimensions transversales varient le long de la direction d'empilement des couches.

L'outil de matriçage 230, représenté en figure 7, comprend une platine 231, formant une matrice, dans laquelle est usinée une empreinte 232 de la forme externe de la bielle 1 à fabriquer. Cette matrice est installée dans une presse qui porte au niveau de l'extrémité de son vérin un poinçon 233 ayant une forme complémentaire de l'empreinte.

Lorsque la préforme 10 a été installée dans l'empreinte de l'outil de matriçage 230, le cycle de chauffe et de matriçage peut débuter. La presse est alors commandée pour rapprocher le poinçon 233 et la matrice 231, jusqu'à établir une pression prédéterminée pendant une durée prédéterminée. La matrice 231 et le poinçon 233 coopèrent ensemble de telle manière que la résine soit contenue, c'est-à-dire qu'elle ne fuit pas de la matrice 231 (les jeux entre la matrice 231 et le poinçon 233 sont réduits au minimum). On s'assure en outre qu'aucune fibre ne sorte de la matrice 231 lors de l'insertion du poinçon 233 pour éviter qu'elle ne soit cisaillée par le poinçon 233.

Cette opération de matriçage est réalisée à chaud : à ce titre, l'outil de matriçage 230 est avantageusement prévu chauffant pour réchauffer la préforme 10 avant le début du cycle de matriçage. L'outil de matriçage 230 peut alternativement être chauffé dans un four en amont.

Les différentes opérations de pré-consolidation et de matriçage sont ici réalisées à une température proche ou égale à la température de fusion de la résine thermoplastique utilisée. Bien sûr, ces températures sont adaptées au type de résine thermoplastique utilisé afin d'avoir une imprégnation suffisante des fibres et une bonne consolidation.

La pièce est avantageusement refroidie, au moins partiellement avant son extraction de l'outillage de matriçage. Ce refroidissement est ici réalisé par un refroidissement forcé de l'outillage de matriçage tout en maintenant une pression de consolidation dans l'outillage pendant toute la durée nécessaire à la solidification de la résine thermoplastique, ce qui permet d'extraire de la matrice une bielle brute non déformée et consolidé.

Conformément à l'invention, la fabrication d'une pièce ayant une géométrie différente de cette bielle est assurée avec des outillages analogues adaptés à cette autre géométrie.

Le placement des fibres contribue à conférer à la pièce fabriquée une tenue mécanique importante, en plus de permettre la fabrication de pièces tridimensionnelles et/ou massives pouvant avoir une forme complexe. D'une manière générale, l'invention permet de réaliser une pièce tridimensionnelle ayant une densité de fibres élevée, pouvant atteindre au minimum 55% de taux de fibres environ. De préférence, ces fibres se présentent sous forme d'un ou plusieurs torons de fibres continues et orientées selon la trajectoire utilisée lors de l'enroulement.

Les fibres longues sont disposées et orientées pour garantir les performances mécaniques de la pièce en s'étendant au moins en partie selon au moins une direction de sollicitation mécanique de la pièce à fabriquer. Concrètement, toute la phase de mise en place des fibres permet de positionner et d'orienter les fibres dans un état très proche de celui qu'elles vont avoir dans la pièce finie : l'orientation des fibres peut ainsi être complètement optimisée par rapport aux besoins techniques et mécaniques de la pièce. La phase de matriçage qui suit le placement des fibres permet d'obtenir une géométrie souhaitée, avec un degré de précision élevé.

Comme les fibres sont positionnées dans chaque couche pour s'étendre sur une zone ayant une surface, transversalement à la première dimension, voisine d'une surface de la section transversale de la pièce à obtenir, les fibres s'étendant en périphérie de chaque couche s'étendent au voisinage de la surface externe de la pièce, et plus précisément sous ladite surface externe.

Par ailleurs, il est possible de placer un insert dans la préforme pour que celui-ci soit intégré à la pièce finie en étant rigidement solidarisé au corps de la pièce finie afin de faciliter par exemple les transferts d'efforts ou l'assemblage avec d'autres composants. Un tel insert est typiquement un élément d'une nature autre que le corps de la pièce, comme par exemple un insert de type métallique, un capteur, un palier, une partie de d'assemblage ou de fixation. Le procédé comprend alors l'étape de placer dans l'outillage de préformage ou de matriçage au moins un insert pour que l'insert soit intégré dans le matériau de la préforme ou de la pièce matricée. A cette fin, le ou les inserts sont ici disposés dans le moule avant placement des fibres et les fibres sont disposées pour entourer au moins en partie l'insert et participer à sa retenue dans la préforme.

Ainsi, ce procédé de fabrication permet de fabriquer en matériau composite des pièces initialement fabriquées en acier ou autre, pour les remplacer par des pièces en matériau composite ayant un poids et/ou un volume plus faible et une tenue mécanique comparable selon un cas de charge donné.

On notera que l'outillage de mise en forme est de préférence agencé pour que la pièce obtenue présente des caractéristiques géométriques finales de la pièce à fabriquer. Ceci permet de limiter, voire supprimer, les reprises d'usinage à réaliser après la mise en forme.

On notera également que la fixation des couches entre elles peut être réalisée par un autre moyen que le soudage résultant de la fusion de la résine entourant les fibres.

En particulier, comme représenté en variante à la figure 8, les couches 100 sont liées les unes aux autres en les cousant, ou en variante en les brodant, sur un support 150. Le support peut être tissé ou non tissé, et par exemple un tissu ou une feuille. Le tissu ou la feuille peut être en matériau thermoplastique.

Le support peut être en un matériau soluble à l'eau, en un matériau dégradable sous l'effet d'un cycle thermique et par exemple dégradable à chaud, ou en un matériau compatible qui fond au contact de la résine introduite dans l'outillage. Le support peut donc n'avoir aucune fonction de renforcement dans la bielle une fois réalisée.

En variante, il est possible d'utiliser au contraire un tissu 150 constitué d'un matériau ayant des propriétés mécaniques permettant au tissu 150 d'assurer un renforcement mécanique de la bielle 1. Le tissu peut être agencé et positionné par rapport à la pièce finie de telle manière que les fibres du tissu soient orientées pour contribuer au renforcement mécanique de la pièce en utilisation.

Les fibres et/ou fils de différentes compositions peuvent également être brodés directement sur le tissu 150.

Bien entendu, l'invention n'est pas limitée aux modes de mise en oeuvre décrits mais englobe toute variante de réalisation entrant dans le champ de l'invention telle que définie par les revendications.

Le procédé selon l'invention permet de fabriquer des pièces ayant des formes complexes, s'étendant selon les trois dimensions, et pouvant également être massives soit dans des régions localisées, soit sur l'ensemble de la pièce.

Différentes solutions peuvent être envisagées en ce qui concerne le bobinage des fibres sur les outils de préformage, en fonction des particularités de formes que l'on souhaite obtenir au niveau de la pièce à fabriquer. On note que les fibres suivent des trajectoires qui délimitent à la fois les paliers 3 et 4, les bras 2.1 et 2.2, les nervures 5.1 et 5.2.

La pièce peut être obtenue en bobinant un seul toron de fibres par couche. Mais dans le cas d'une pièce de forme plus complexe ou plus massive, il est tout à fait possible de bobiner plusieurs torons correspondant par exemple à plusieurs parties de la pièce à fabriquer.

Les fibres de renfort sont pré-imprégnées de résine thermoplastique. En variante, on peut utiliser des fibres sèches mises en place dans un outillage formant moule dans lequel la résine thermoplastique serait introduite ultérieurement. La liaison des couches de fibres entre elles peut alors être réalisée par couture.

Les fibres peuvent être en tout matériau susceptible de renforcer mécaniquement la pièce souhaitée, compte tenu des performances recherchées, et notamment en verre, carbone, acier, polyaramide ou autre... Chaque couche peut comprendre des fibres de matériaux différents ou une couche peut comprendre des fibres en un matériau et la couche adjacente des fibres en un autre matériau.

Les fibres sont longues ou craquées c'est-à-dire qu'elles ont une longueur minimale par exemple supérieure à 4 centimètres. Les fibres craquées sont des fibres longues qui ont été rompues puis réassemblées pour reconstituer des fibres longues (fibres comélées craquées). Les fibres peuvent être continues. Les fibres peuvent avoir une longueur sensiblement égale à un multiple entier -par exemple deux, trois, quatre ou plus-de la longueur de la pièce. Certaines des fibres peuvent être courtes, c'est-à-dire avoir une longueur inférieure à 4 centimètres. Ces fibres courtes peuvent être rajoutées en complément dans certaines zones.

Des fibres ayant une fonction autre que le renforcement peuvent également être rajoutées dans la résine ou combinées aux fibres de renfort, et par exemple des fibres optiques ou toutes autres fibres susceptibles de transmettre un signal telles que des fibres en matériau électriquement conducteur. Ces fibres conductrices de signal peuvent par exemple avoir une extrémité reliée à un capteur noyé dans la pièce et une extrémité opposée débouchant à l'extérieur de la pièce pour être raccordée à une unité de traitement du signal.

La résine peut être en différents matériaux thermoplastiques et par exemple en : polypropylène, polyamide, acrylique, polyéthylène sulfone (PES), polyétherester cétone (PEEK), polyéther cétone cétone (PEKK), polyéther imide (PEI)...

Les plots de l'outillage peuvent être des plots épaulés comme des plots de révolution comportant une embase cylindrique prolongée par un téton coaxial de plus faible diamètre que l'embase. Cette forme des plots permet de réaliser des paliers ou chapes dont la surface interne est elle-même chanfreinée, c'est-à-dire qu'elle comporte deux zones ayant deux diamètres différents. Avec de tels plots, le toron de fibres peut être bobiné sur un nombre de tours important en étant agencé de façon à constituer une seule couche circonférentielle autour de l'embase du plot, et deux couches circonférentielles concentriques autour de l'extrémité supérieure du plot.

Le procédé peut comprendre l'étape ultérieure d'assembler plusieurs pièces, dites intermédiaires, entre elles pour obtenir une pièce finale encore plus complexe.

En variante, toutes les couches d'un même assemblage de couches peuvent être, ou ne pas être, fixées les unes aux autres de la même manière. Au moins une partie des fibres comprend une fibre pré-imprégnée d'une résine et au moins l'une des couches est réalisée en enroulant sous tension ou non une fibre pré-imprégnée à une température supérieure à une température de fusion de la résine. Toutes ou partie des couches peuvent être réalisées par fabrication additive en déposant des épaisseurs successives d'une fibre entourée d'une résine à une température supérieure à une température de fusion de la résine. Toutes ou partie des couches peuvent être réalisées en brodant au moins une fibre sur un tissu.

Le procédé de l'invention peut être mis en oeuvre avec ou sans étape de préformage. Dans ce dernier cas, l'assemblage A est directement mis en place dans l'outil de matriçage.

Le refroidissement peut être obtenu par la mise en oeuvre d'un cycle thermique piloté ou non (cas d'un refroidissement libre).

En variante, on dépose non plus la préforme 10 dans l'outil de matriçage, mais directement les préformes 100.

La pièce fabriquée par le procédé de l'invention peut avoir des différences localisées de hauteur dans la direction d'empilement (en ajoutant une ou plusieurs couches plus petites que la précédente) ou de largeur perpendiculairement à la direction d'empilement (en ajoutant une ou plusieurs couches plus grandes que les autres).

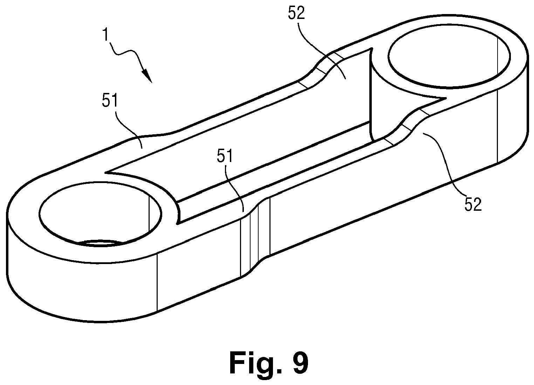

Ainsi, est représentée en figure 9 une bielle 1 ayant une zone 51 de largeur plus importante et une zone 52 de hauteur plus importante. La zone 51 est obtenue par l'ajout de fibres périphériques supplémentaires pour élargir les couches constituant cette zone. La zone 52 est obtenue par l'ajout de couches supplémentaires en hauteur.

Les fibres peuvent avoir des orientations différentes dans une même couche mais également d'une couche à l'autre.

Il est possible d'utiliser des torons de fibres de diamètres différents en fonction par exemple de la géométrie de la pièce finale : torons de petit diamètre dans les parties relativement étroite ou ayant un petit rayon de courbure (le rayon de courbure peut être quasi-nul selon la souplesse de la fibre utilisée) et torons de plus grand diamètre dans le reste de la pièce.

Les fibres sont de préférence déposées dans chaque couche en étant accolées les unes aux autres selon une direction transversale à la direction d'empilement. De préférence encore, les fibres sont déposées en boucle autour de la direction d'empilement.

En variante, les couches peuvent ne pas être liées mécaniquement entre elles.

Dans le cas où tout ou partie des couches sont réalisées par un procédé de fabrication additive (ou impression 3D), il est possible de déposer l'ensemble fibres et résine de manière continue dans toutes les directions de l'espace.

## Revendications

1. Procédé pour fabriquer une pièce (1) en matériau composite, comprenant les étapes de :
- disposer des fibres longues de renfort (24) et de la résine dans un outillage ; les fibres longues étant disposées pour s'étendre au moins en partie selon au moins une direction de sollicitation mécanique de la pièce à fabriquer ;
- mettre en forme à chaud cette préforme dans un outillage de mise en forme, en veillant à contenir les fibres et la résine dans l'outillage pour obtenir la pièce ;
- effectuer une phase de refroidissement de la pièce en la maintenant sous pression ;
**caractérisé en ce que** les fibres sont placées dans l'outillage sous la forme d'un empilement de couches successives ; **en ce que** l'empilement de couches a une hauteur égale à une première dimension extérieure de la préforme ; et **en ce que** les fibres disposées en périphérie de chaque couche s'étendent au voisinage d'une surface externe de la pièce.

2. Procédé selon la revendication 1, dans lequel au moins une partie des couches comprend des fibres pré-imprégnées d'une résine et enroulées sous tension ou non à une température proche ou supérieure à une température de fusion de la résine.

3. Procédé selon la revendication 1 ou la revendication 2, dans lequel au moins l'une des couches est réalisée par fabrication additive en déposant des épaisseurs successives d'une fibre entourée d'une résine à une température supérieure à une température de fusion de la résine.

4. Procédé selon l'une quelconque des revendications précédentes, dans lequel au moins l'une des couches est réalisée en brodant au moins une fibre sur un support tel qu'un tissu ou une feuille.

5. Procédé selon la revendication 4, dans lequel le support est en un matériau soluble à l'eau.

6. Procédé selon la revendication 4, dans lequel le support est en un matériau dégradable sous l'effet d'un cycle thermique.

7. Procédé selon la revendication 4, dans lequel le support est en un matériau qui fond au contact de la résine introduite dans l'outillage.

8. Procédé selon la revendication 4, dans lequel le support assure une fonction de renfort de la pièce.

9. Procédé selon l'une quelconque des revendications précédentes, dans lequel au moins deux des couches sont mécaniquement liées entre elles par fusion de la résine.

10. Procédé selon l'une quelconque des revendications précédentes, dans lequel au moins deux des couches sont mécaniquement liées entre elles par couture.

11. Procédé selon l'une quelconque des revendications précédentes, dans lequel le nombre de couches est déterminé pour que l'empilement de couches ait la masse sensiblement égale à la masse de la pièce à réaliser.

12. Procédé selon l'une quelconque des revendications précédentes, dans lequel l'outillage de mise en forme est agencé pour que la pièce obtenue présente des caractéristiques géométriques finales de la pièce à fabriquer.

13. Procédé selon l'une quelconque des revendications précédentes, dans lequel des fibres de fonctionnalités différentes des fibres de renfort sont combinées aux fibres de renfort.

14. Procédé selon l'une quelconque des revendications précédentes, comprenant, préalablement à la mise en forme, l'étape de disposer les fibres longues de renfort (24) et la résine dans un outillage de préformage (16) de manière à constituer une préforme de la pièce (1) ; la mise en forme étant réalisée sur la préforme.

15. procédé selon la revendication 14, comprenant l'étape de placer dans l'outillage de préformage au moins un insert pour que celui-ci soit intégré dans le matériau de la préforme, les fibres étant disposées pour entourer l'insert et participer à sa retenue dans la préforme.

16. Procédé selon la revendication 14 ou la revendication 15, comprenant l'étape de compresser la préforme avant durcissement de la résine afin d'obtenir un taux volumique de fibres prédéterminé, les quantités relatives de fibres et de résine étant choisies en fonction de ce taux volumique.

17. Procédé selon la revendication 16, dans lequel le taux volumique de fibres prédéterminé est d'environ 65% dans la pièce.

18. Procédé selon l'une quelconque des revendications précédentes, dans lequel les fibres ont une longueur au moins supérieure ou égale à un multiple entier d'une longueur de la pièce.

19. Procédé selon l'une quelconque des revendications précédentes, dans lequel les fibres sont agencées, préalablement à leur dépôt, selon un ensemble allongé ayant une section transversale sensiblement circulaire.

20. Procédé selon l'une quelconque des revendications précédentes, dans lequel les fibres déposées de manière discontinue entre deux couches.

21. Procédé selon l'une quelconque des revendications précédentes, dans lequel les fibres sont déposées dans chaque couche en étant accolées les unes aux autres selon une direction transversale à la direction d'empilement.

22. Procédé selon la revendication 21, dans lequel les fibres sont déposées en boucle autour de la direction d'empilement.
